# EUROPÄISCHE PATENTSCHRIFT

(11) **EP 3 473 344 B1**
(45) Veröffentlichungstag und Bekanntmachung des Hinweises auf die Patenterteilung: **22.06.2022**
(21) Anmeldenummer: 18206829.6
(22) Anmeldetag: 28.08.2015
(51) Int. Cl.: B05C 3/109, B05C 19/04, B05C 3/00, B05C 3/04, B08B 3/04

(54) **SYSTEM ZUR OBERFLÄCHENBEHANDLUNG VON FORMTEILEN**
SYSTEM FOR SURFACE TREATMENT OF MOULDED PARTS
SYSTÈME DE TRAITEMENT DE LA SURFACE DES PIÈCES MOULÉES

(30) Priorität: 29.08.2014 DE 102014112508
(43) Veröffentlichungstag der Anmeldung: 24.04.2019
(62) Teilanmeldung aus: 15756904.7
(73) Patentinhaber: DyeMansion GmbH, 82152 Planegg (DE)
(72) Erfinder: Ewald, Felix, 80689 München (DE); Kramer, Philipp, 80339 München (DE)
(74) Vertreter: 2s-ip Schramm Schneider Bertagnoll Patent- und Rechtsanwälte Part mbB

(56) Entgegenhaltungen:
- EP-A1- 2 502 542
- WO-A1-2011/137929
- DE-A1- 1 785 623
- DE-A1- 3 302 687
- DE-A1-102006 043 973
- DE-A1-102010 001 101
- DE-B- 1 060 832
- US-A- 3 574 561
- US-A- 4 726 318

## Beschreibung

### Gebiet der Erfindung

Die Erfindung betrifft eine Kapsel zur Oberflächenbehandlung von Formteilen, insbesondere von in einem 3D-Druckverfahren hergestellten Formteilen.

### Stand der Technik und Hintergrund der Erfindung

Oberflächen von in einem 3D-Druckverfahren hergestellten Formteilen werden im Stand der Technik vorzugsweise manuell behandelt. So werden solche Formteile beispielsweise manuell eingefärbt oder manuell imprägniert. Um die Oberflächenbehandlung effizienter zu gestalten, ist es bekannt, die zu bearbeitenden Formteile in ein Gefäß, etwa in einen Färbetopf zu geben, in das auch das Färbemittel gegeben wird. Dabei können mehrere Formteile beispielsweise gleichzeitig eingefärbt werden. Üblicherweise müssen in einem 3D-Druckverfahren hergestellte Formteile vor und nach dem Färbevorgang vor- bzw. nachbehandelt werden, wofür ebenfalls jeweils ein entsprechendes Gefäß vorgesehen wird, in denen die Vor- bzw. Nachbehandlungsschritte durchgeführt werden.

Für eine Serienfertigung von in einem 3D-Druckverfahren hergestellten Formteilen ist diese Vorgehensweise allerdings nicht geeignet. Zum einen muss für ein gleichbleibendes Färbeergebnis bei einer Vielzahl von Formteilen gewährleistet werden, dass die Zusammensetzung des Färbemittels bei jedem Färbevorgang dieselbe ist, zum anderen müssen die Formteile manuell von dem Gefäß der Vorbehandlung in das Färbegefäß und von dem Färbegefäß in das Gefäß der Nachbehandlung gegeben werden. Ferner muss in allen drei Behandlungsschritten gewährleistet werden, dass die jeweiligen Prozessparameter innerhalb gewisser Toleranzgrenzen bleiben, und zwar über lange Zeiträume, wenn eine große Anzahl von Formteilen mit gleichbleibendem Ergebnis zu behandeln ist.

Das Dokument EP-A1-2502542 offenbart ein System umfassend eine Kapsel und eine Düse, wobei in einer Wandung des Gehäuses der Kapsel mittels Durchstechen der Wandung eine Öffnung ausbildbar ist, und einer Kammer im Inneren des Gehäuses mittels der Düse mit einem Fluid beaufschlagbar ist.

### Aufgabe der Erfindung

Aufgabe der vorliegenden Erfindung ist es daher, Lösungen zu schaffen, die es erlauben, die Oberflächenbehandlung von Formteilen, insbesondere von in einem pulverbasierten Fertigungs- bzw. Druckverfahren (3D-Druckverfahren) hergestellten Formteilen, effizienter zu gestalteten, und insbesondere eine Oberflächenbehandlung solcher Formteile in industriellem Maßstab, insbesondere in der Serienfertigung, zu ermöglichen, wobei gleichzeitig ein gleichbleibendes Behandlungsergebnis gewährleistet werden soll.

### Erfindungsgemäße Lösung

Diese Aufgabe wird erfindungsgemäß durch eine Kapsel nach dem unabhängigen Anspruch gelöst. Vorteilhafte Ausgestaltungen und Weiterbildungen der Erfindung ergeben sich aus den abhängigen Ansprüchen.

Offenbart wird eine Kapsel, wobei
- die Kapsel ein weitgehend druckstabiles und fluiddichtes Gehäuse aufweist,
- im Inneren des Gehäuses zumindest eine Kammer ausgebildet ist zur Aufnahme eines flüssigen und/oder pulverförmigen Oberflächenbehandlungsmittels,
- in der Wandung des Gehäuses zumindest eine Auslassöffnung ausgebildet ist oder ausbildbar ist, wobei durch die Auslassöffnung das Oberflächenbehandlungsmittel entweichen kann, und
- die zumindest eine Kammer der Kapsel mit einem Fluid und/oder Gas beaufschlagbar ist, um das Entweichen des Oberflächenbehandlungsmittels durch die Auslassöffhung zu bewirken.

In der Wandung des Gehäuses der Kapsel ist zumindest eine Einlassöffnung ausbildbar, wobei durch die Einlassöffnung die zumindest eine Kammer der Kapsel mit dem Fluid und/oder Gas beaufschlagbar ist.

Im Inneren des Gehäuses der Kapsel können zumindest zwei, vorzugsweise drei Kammern ausgebildet sein, wobei jede Kammer ein flüssiges und/oder pulverförmiges Oberflächenbehandlungsmittel aufnimmt, wobei jeder Kammer zumindest eine Einlassöffnung und zumindest eine Auslassöffhung zugeordnet ist, wobei die Kammern unabhängig voneinander mit dem Fluid und/oder Gas beaufschlagbar sind beaufschlagbar sind und wobei aus jeder Kammer unabhängig voneinander das Oberflächenbehandlungsmittel entweichen kann.

In dem Gehäuse können Kammerwandungen vorgesehen sein, die die Kammern fluid- und luftdicht voneinander trennen, wobei die Kammerwandungen vorzugsweise aus einem stabilen Material bestehen.

In einer nicht erfindungsgemäßen Ausgestaltung der Kapsel können die Einlassöffnungen gleichzeitig auch die Auslassöffnungen sein. Das heißt, durch das Aufstechen der Kapsel mit einer Düse wird eine Öffnung erzeugt, um der Kammer das Fluid und/oder Gas zuzuführen (Einlassöffnung). Gleichzeitig kann aus derselben Öffnung das Oberflächenbehandlungsmittel austreten (Auslassöffhung).

Die Auslassöffnungen können jeweils eine Sperreinrichtung aufweisen, die angepasst sind, die Auslassöffhungen für ein Entweichen des Oberflächenbehandlungsmittels zu öffnen, sobald der Druck in der jeweiligen Kammer einen vorbestimmten Wert überschreitet.

Die Sperreinrichtungen können als Rückschlagventile ausgestaltet sein, die ab einem bestimmten Druck in der jeweiligen Kammer öffnen. Alternativ können die Sperreinrichtungen auch Membrane umfassen, die bei einem bestimmten Druck in der jeweiligen Kammer zerstört werden.

Alternativ können die Sperreinrichtungen auch so ausgestaltet sein, dass sich diese unabhängig vom jeweiligen Druck in der Kammer der Kapsel öffnen lassen. Die Sperreinrichtungen können etwa als Magnetventile ausgestaltet sein, die von einer externen Einrichtung, etwa eine Datenverarbeitungseinrichtung oder eine Steuereinrichtung, aktiviert und deaktiviert werden können. Vorteilhaft ist es hierbei, wenn die jeweiligen Kammern der Kapseln zum Zeitpunkt des Öffnens der Ventile bereits mit Druck beaufschlagt sind oder bei Öffnen der der Ventile mit Druck beaufschlagt werden.

Erfindungsgemäß ist zumindest ein Abschnitt der Wandung des Gehäuses der Kapsel als Einstichbereich ausgebildet, wobei in dem Einstichbereich die Auslassöffnung und die Einlassöffnung herstellbar sind. Vorteilhaft ist es hierbei, wenn der Einstichbereich dünnwandiger ausgestaltet ist als die übrige Wandung des Gehäuses.

In dem Einstichbereich kann zumindest eine Sollbruchstelle vorgesehen sein.

An dem Gehäuses der Kapsel kann ein Barcode, QR-Code, RFID-Tag oder NFC-Tag angeordnet sein, die Informationen darüber enthalten bzw. speichern, welches Oberflächenbehandlungsmittel sich in welcher Kammern der Kapsel befindet und welche Verfahrensparameter und/oder Maschinenparameter bei der Oberflächenbehandlung wie einzustellen sind.

### Kurzbeschreibung der Figuren

Weitere Einzelheiten und Merkmale der Erfindung ergeben sich aus der nachfolgenden Beschreibung in Verbindung mit der Zeichnung. Es zeigt:
- Fig. 1: eine erste Ausführungsform einer Vorrichtung zur Oberflächenbehandlung von Formteilen in einem Querschnitt;
- Fig. 2: eine Ausführungsform einer Kapsel zur Verwendung in einer Vorrichtung zur Oberflächenbehandlung;
- Fig. 3: eine zweite Ausführungsform einer Vorrichtung;
- Fig. 4: eine alternative Ausführungsform eines Korbes mit einer Kapselaufnahme;
- Fig. 5: ein Beispiel einer Kapsel mit eingeführten Düsen einer Beaufschlagungseinrichtung;
- Fig. 6: eine alternative Ausgestaltung einer Düse;
- Fig. 7: eine Detailansicht einer Kapsel im Bereich der Einlass-/Auslassöffnung; und
- Fig. 8: einen Querschnitt durch eine konkrete Ausführungsform einer Vorrichtung zur Oberflächenbehandlung.

### Detaillierte Beschreibung der Erfindung

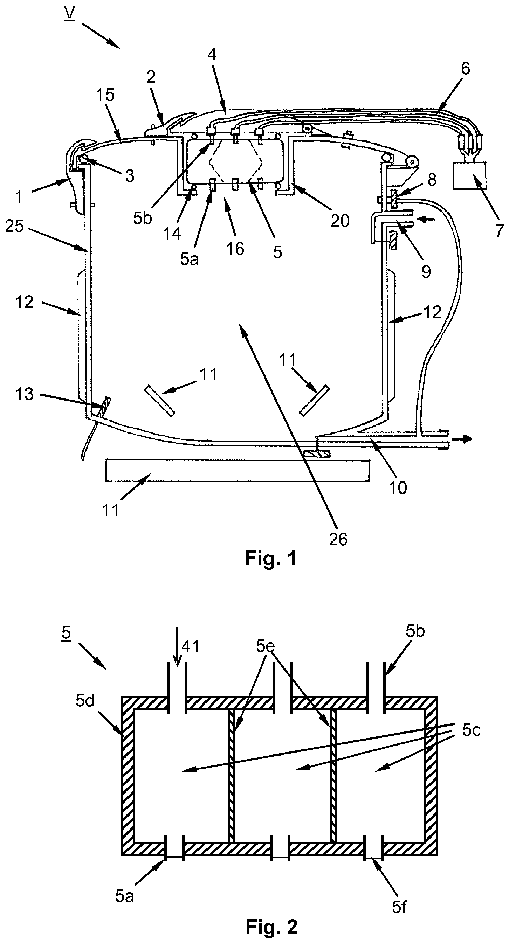

**Fig. 1** zeigt eine Vorrichtung V zur Oberflächenbehandlung von Formteilen in einem Querschnitt.

Die Vorrichtung V besteht hier aus einem Behältnis 25, das mit einem ersten Deckel 15 verschließbar ist. Der erste Deckel 15 ist schwenkbar an dem oberen Rand des Behältnisses 25 angelenkt. Der erste Deckel 15 und das Behältnis 25 sind so dimensioniert, dass im Inneren der Vorrichtung ein Druck von etwa 0,3 Bar (Unterdruck) bis 2,5 Bar (Überdruck) erzeugt werden kann. Zum Erzeugen des Überdruckes ist die Vorrichtung an einen Kompressor angeschlossen. Zum Erzeugen des Unterdruckes ist die Vorrichtung über ein Ventil 8 an eine Vakuumpumpe angeschlossen.

Der erste Deckel 15 wird mittels einer Verriegelung 1 verschlossen. Zwischen dem ersten Deckel 15 und dem oberen Rand des Behältnisses 25 ist eine umlaufende Dichtung vorgesehen, die gewährleistet, dass der Deckel 15 fluid-, druck- und luftdicht verschlossen werden kann.

In der in Fig. 1 gezeigten Ausgestaltung der Vorrichtung V ist in dem ersten Deckel 15 eine Kapselaufnahme 20 vorgesehen, die hier in den Innenraum 26 des Behältnisses 25 hineinragt und in der eine Kapsel 5 angeordnet werden kann. Die Kapselaufnahme 20 wird hier von einem zweiten Deckel 4 verschlossen, der schwenkbar an dem ersten Deckel 15 angelenkt ist. Ferner ist die Kapsel 5 bzw. der zweite Deckel 4 so ausgestaltet bzw. dimensioniert, dass beim Schließen des zweiten Deckels 4 die Kapsel 5 gegen der Boden der Kapselaufnahme 20 gedrückt wird. In dem Boden der Kapselaufnahme 20 ist eine Öffnung 16 vorgesehen in der Auslassöffhungen 5a der Kapsel 5 angeordnet sind bzw. hineinragen. Über die Auslassöffnungen 5a der Kapsel 5 wird ein in der Kapsel 5 aufgenommenes Oberflächenbehandlungsmittel, etwa ein Färbemittel, dem Innenraum 26 des Behältnisses 25 zugeführt, wie weiter unten nähen beschrieben wird.

Die Öffnung 16 der Kapselaufnahme 20 weist eine umlaufende Dichtung 14 auf, auf der die Kapsel 5 aufliegt und gegen die die Kapsel 5 gedrückt wird. Die Kapsel bzw. der Boden der Kapsel weist demnach eine größer Grundfläche auf als die Öffnung 16 der Kapselaufnahme 20, d.h. die Kapsel ragt umlaufend über die Öffnung 16 der Kapselaufnahme 20 hinaus. Durch Drücken der Kapsel 5 gegen die Dichtung 14 wird gewährleistet, dass der Innenraum 26 des Behältnisses 25 luft-, fluid- und druckdicht verschlossen ist, sobald auch der erste Deckel 14 geschlossen wird.

An der Unterseite des zweiten Deckels 4 bzw. an der der Kapsel 5 zugewandten Oberfläche des zweiten Deckels 4 kann ebenfalls eine umlaufende Dichtung vorgesehen sein, die bei geschlossenem Deckel 4 gegen die Kapsel gedrückt wird. Diese Dichtung dient einerseits dazu, dass die Kapsel 5 mit dem zweiten Deckel 4 nicht beschädigt wird. Andererseits dient sie dazu, dass der Raum zwischen Kapsel 5, zweitem Deckel 4 und dieser umlaufenden Dichtung weitgehend luft-, fluid- und druckdicht ausgestaltet ist. Denn an der Oberseite der Kapsel 5 und innerhalb dieser umlaufenden Dichtung sind Einlassöffnungen 5b der Kapsel 5 angeordnet, an die Zuleitungen angeschlossen sind, die hier als Druckschläuche 6 ausgestaltet sind.

Der zweite Deckel 4 kann ebenfalls mit einer Verriegelung 2, die an dem ersten Deckel 15 angeordnet ist, verschlossen werden.

An dem zweiten Deckel 4 sind hier Pneumatikkupplungen vorgesehen, die über die Druckschläuche 6 einerseits mit den Einlassöffnungen 5b der Kapsel 5 und andererseits mit einem Kompressor 7 gekoppelt sind. Der Kompressor ist hier als externer Kompressor 7 gezeigt. Er kann aber auch integraler Bestandteil der Vorrichtung V sein. Mit dem Kompressor 7 wird die Kapsel 5 (d.h. der Innenraum der Kapsel 5) mit Druck (Überdruck) beaufschlagt, vorzugsweise mit einem Gas und/oder einem Fluid. Der in der Kapsel 5 so erzeugte Überdruck bewirkt, dass das in der Kapsel 5 vorgesehene Oberflächenbehandlungsmittel durch die Auslassöffnungen 5a der Kapsel 5 in den Innenraum 26 des Behältnisses 25 entweichen kann. Mit dem zugeführten Gas und/oder Fluid kann zudem die Kammer der Kapsel durchgespült werden, sodass das Oberflächenbehandlungsmittel vollständig aus der Kammer entweicht.

Die Kapsel 5 weist bei der in Fig. 1 gezeigten Ausgestaltung drei Kammern auf, die jeweils mit einem Oberflächenbehandlungsmittel gefüllt sind. Je nach konkretem Anwendungsfall können aber auch mehr als drei oder weniger als drei Kammern vorgesehen sein. Jeder der drei Kammern ist eine Auslassöffnung 5a und eine Einlassöffnung 5b zugeordnet. Erfindungsgemäß ist es vorgesehen, dass jede der Kammern unabhängig voneinander mit einem Gas, etwa Druckluft, und/oder mit einem Fluid, etwa Wasser, beaufschlagt werden kann, sodass beispielsweise die in den Kammern enthaltenen Oberflächenbehandlungsmittel in bestimmten zeitlichen Abständen hintereinander dem Innenraum 26 zugeführt werden können.

Den Kammern können jeweils auch mehrere Auslassöffnungen 5a und mehrere Einlassöffnungen 5b zugeordnet sein.

Der Kompressor 7 ist hier mit einer Steuereinrichtung oder mit einer Datenverarbeitungseinrichtung gekoppelt, die den Kompressor so steuert, dass die einzelnen Kammern der Kapsel 5 gemäß einem vorbestimmten Programmablauf mit einem Gas und/oder Fluid beaufschlagt und damit entleert werden.

Der einzuhaltende Programmablauf hängt im Wesentlichen von den in den Kammern der Kapseln vorhandenen Oberflächenbehandlungsmittel und von der Materialbeschaffenheit der zu bearbeitenden Formteile ab. Das heißt die Kammern müssen gegebenenfalls zu unterschiedlichen Zeitpunkten oder in unterschiedlicher Reihenfolge mit dem Gas und/oder Fluid beaufschlagt werden. Hierzu ist es vorgesehen, dass an der Kapsel Barcodes, QR-Codes, RFID-Tags oder NFC-Tags angeordnet sind, die mit einem entsprechenden (hier nicht gezeigten) Lesegerät ausgelesen werden können. Das Lesegerät kann etwa an der Unterseite des zweiten Deckels 4 angeordnet sein (wenn die Codes oder Tags an der Oberseite der Kapsel 5 angeordnet sind) oder an einer Innenseite einer Seitenwand der Kapselaufnahme 20 (wenn die Codes oder Tags an einer Seitenwand der Kapsel 5 angeordnet sind).

Die Codes bzw. die Tags enthalten zumindest Information darüber, welches Oberflächenbehandlungsmittel sich in welcher Kammer der Kapsel befindet. Weitere Information, die in den Codes oder Tags enthalten und mit dem Lesegerät gelesen werden können, können sein:
- Reihenfolge, in der die Kammern mit Druck zu beaufschlagen sind,
- Druck/Temperatur/pH-Wert der im Inneren 26 des Behältnisses beim Entleeren der jeweiligen Kammer vorherrschen muss,
- Mindest-/Maximalmenge eines Trägermittels (z.B. Wasser), das im Inneren 26 des Behältnisses enthalten sein muss,
- Sollwerte bestimmter Betriebsparameter der Vorrichtung V.

Je nach konkreter Anwendung können noch weitere Information enthalten sein.

Das Lesegerät kann mit der Steuereinrichtung oder Datenverarbeitungseinrichtung gekoppelt sein, die dann anhand der gelesenen Information die Vorrichtung V und den Kompressor 7 steuern kann, sodass eine komplette Oberflächenbehandlung vollautomatisch und im Wesentlichen ohne menschliches Zutun abgewickelt werden kann. Es müssen nur mehr die zu bearbeitenden Formteile in die Vorrichtung V eingebracht und nach Abschluss der Oberflächenbehandlung wieder aus der Vorrichtung V entnommen werden. Nach Einbringen der Kapsel 5 in die Kapselaufnahme 20 werden sämtliche für die Oberflächenbehandlung notwendigen Parameter und Daten von den Tags bzw. Codes ausgelesen und der Steuer- bzw. Datenverarbeitungseinrichtung zugeführt. Die Oberflächenbehandlung muss von dem Bedienpersonal nur noch gestartet werden.

Damit ist ein deutlich höherer Durchsatz bei der Oberflächenbehandlung von Formteilen gegenüber den aus dem Stand der Technik bekannten Verfahren möglich. Zudem wird durch das erfindungsgemäße Kapselsystem eine qualitativ gleichbleibende Oberflächenbehandlung gewährleistet, weil die Kapsel samt der darin enthaltenen Oberflächenbehandlungsmittel vorkonfektioniert werden können. Auf korrekte Mischungsverhältnisse der Oberflächenbehandlungsmittel muss nicht mehr geachtet werden, weil diese bereits in den korrekten Mischungsverhältnissen in den Kammern der Kapseln enthalten sind. Sofern es auf das Mischungsverhältnis von Oberflächenbehandlungsmittel und Trägermittel (z.B. Wasser) ankommt, so kann auch dieses durch entsprechenden Daten in den Codes bzw. Tags hinterlegt sein.

An dem Behältnis 25 ist eine Zufuhröffnung 9 vorgesehen, durch die das Trägermittel (z.B. Wasser) in das Innere 26 des Behältnisses 25 zugeführt werden kann. Die Zufuhröffnung weist ein Absperrventil auf. Anstelle von Wasser kann auch ein anderes Trägermittel zugeführt werden, sofern es die Oberflächenbehandlung erfordert. Welches Trägermittel zuzuführen ist, kann ebenfalls in den Codes bzw. Tags an der Kapsel gespeichert sein. An der Zufuhröffnung 9 bzw. an der mit der Zufuhröffnung 9 gekoppelten Zuführleitung kann eine Heizeinrichtung angeordnet sein, etwa ein Durchlauferhitzer, mit der das dem Behältnis 25 zugeführte Trägermittel auf eine bestimmte Solltemperatur aufgeheizt werden kann. Diese Solltemperatur kann ebenfalls in den Codes bzw. Tags hinterlegt sein.

Am Boden des Behältnisses 25 ist ein Abfluss 10 mit einem Sperrventil vorgesehen, durch den das Gemisch aus Trägermittel und Oberflächenbehandlungsmittel abgeführt werden kann. Zum beschleunigten Ableiten dieses Gemisches aus dem Inneren 26 des Behältnisses 25 kann es vorgesehen sein, den Abfluss 10 mit einer Unterdruckabsaugeinrichtung zu koppeln.

Ferner sind am Behältnis 25 der Vorrichtung V Heiz- und/oder Kühleinrichtungen 12 angeordnet, um das Behältnis 25 zu kühlen und/oder aufzuheizen. Die Heiz- und/oder Kühleinrichtungen 12 können ebenfalls mit der Steuer- und oder Datenverarbeitungseinrichtung gekoppelt sein, sodass auch die für die Steuerung der Heiz- und/oder Kühleinrichtungen 12 benötigten Parameter in den Codes bzw. Tags an der Kapsel 5 hinterlegt sein können. Die Heiz- und/oder Kühleinrichtungen 12 können Heiz-/Kühlmanschetten oder einen ein Thermofluid aufnehmenden Mantel umfassen.

Des Weiteren sind Messwertfühler 13 vorgesehen, mit denen der Druck, der pH-Wert, die Temperatur und/oder weitere Messgrößen im Inneren 26 der Vorrichtung V gemessen werden können. Diese Messgrößen können wiederum der Steuer- und/oder Datenverarbeitungseinrichtung zum Regeln der Oberflächenbehandlung zugeführt werden.

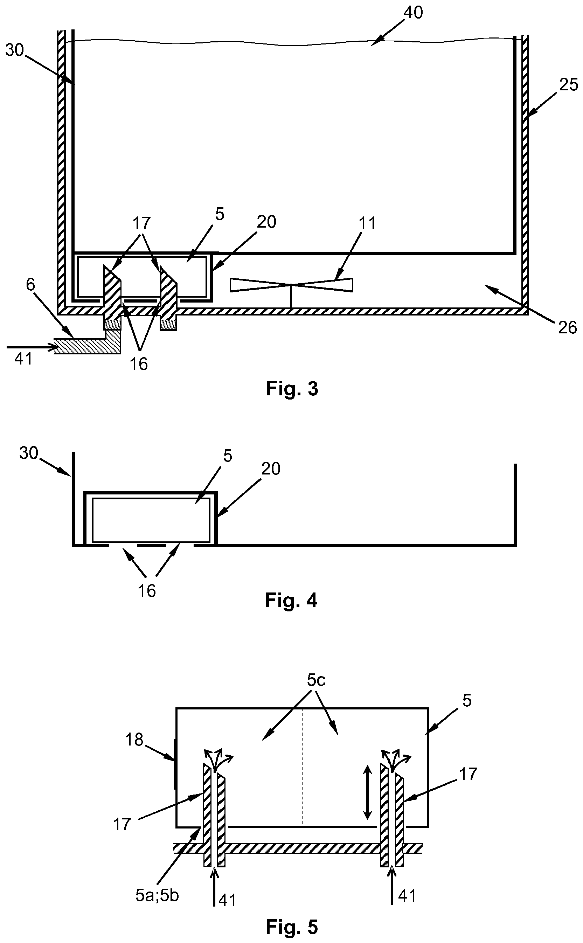

Dem Behältnis 25 ist ferner eine Rühreinrichtung zugeordnet. Bei der in Fig. 1 gezeigten Ausgestaltung der Erfindung ist die Rühreinrichtung als Magnetrührer 11 ausgestaltet. Alternativ können auch Stabrührer oder andere Rühreinrichtungen oder Rührvorrichtungen verwendet werden, was letztlich von der konkreten Anwendung und insbesondere von den zu behandelnden Formteilen abhängt. In Fig. 3 ist eine Vorrichtung mit einem Schrägblattrührer gezeigt.

Die Rühreinrichtung ist in erster Linie dazu vorgesehen, das zugegebene Oberflächenbehandlungsmittel mit dem Trägermittel zu vermischen.

Die Rühreinrichtung kann aber auch dazu verwendet werden, das Trägermittel-Oberflächenbehandlungsmittel-Gemisch während des gesamten Behandlungsvorganges in Bewegung zu halten. Dadurch wird vermieden, dass sich das Oberflächenbehandlungsmittel auf dem Boden des Innenraumes absetzt oder auf dem Trägermittel schwimmt. Eine noch gleichmäßigere Oberflächenbehandlung wird so gewährleistet.

Die Vorrichtung V kann eine Anzeigeeinrichtung, etwa ein Display, aufweisen, um den aktuellen Behandlungsstatus, z.B. einen aktuellen Färbestatus, oder Fehlermeldungen anzuzeigen. Alternativ oder zusätzlich können auch ampelähnliche Vorrichtungen (z.B. LED-Leuchteirichtung) oder Lautsprecher vorgesehen sein, um etwa den aktuellen Behandlungsstatus oder Fehler zu signalisieren.

In einer Ausgestaltung der Vorrichtung V kann diese Reinigungsdüsen aufweisen, um den das Behältnis automatisch zu reinigen. In einer Ausgestaltung kann in dem Deckel eine Reinigungsdüse vorgesehen sein, um Spülwasser dem Innenraum zuzuführen. Ein Reinigungsmittel kann ebenfalls über eine solche Reinigungsdüse zugeführt werden. Das Reinigungsmittel kann aber auch über einen an der Seitenwandung des Behältnisses 25 vorgesehenen Zulauf zugeführt werden.

In einer Ausgestaltung der Erfindung ist es vorgesehen, die behandelten Formteile abschließend zu trockenen, solange sie sich noch in der Vorrichtung befinden. Hierzu kann es vorgesehen sein, nach dem Ablassen des Gemisches durch den Abfluss 10 den Innenraum 26 für eine vorbestimmte Zeit auf eine vorbestimmte Temperatur aufzuheizen. Das Aufheizen kann mit Hilfe eines Temperaturfühlers 13 überwacht werden. Das Aufheizen kann so gesteuert werden, dass die Temperatur einem vorbestimmten zeitlichen Temperaturverlauf folgt, sodass beispielsweise nach einem Färbevorgang oder Imprägniervorgang vermieden werden kann, dass sich an der gefärbten bzw. imprägnierten Oberfläche temperaturbedingte Spannungsrisse bilden.

Alternativ kann der Innenraum 26 auch mit erwärmter bzw. aufgeheizter Luft beaufschlagt werden, um die Formteile zu trocknen.

In einer hier nicht gezeigten Ausgestaltung kann die Kapsel 5 auch außerhalb der Vorrichtung V angeordnet werden. In diesem Fall können die Auslassöffhungen 5a der Kapsel 5 über druckbeständige Leitungen mit an der Vorrichtung, z.B. an dem ersten Deckel 15, vorgesehenen Einlassventilen gekoppelt sein. Diese Einlassventile können mit der Steuer- und/oder Datenverarbeitungseinrichtung gekoppelt sein, um sie entsprechend eines Ablaufprogrammes öffnen und/oder schließen zu können. Auch bei dieser Ausgestaltung wird die Kapsel 5 bzw. werden die Kammern der Kapsel 5 mit einem Gas und/oder einem Fluid beaufschlagt, um die Oberflächenbehandlungsmittel in den Innenraum der Behältnisses einzubringen. Hier kann es sogar günstig sein, die Kapsel 5 bzw. die Kammern der Kapsel 5 dauerhaft mit einem Druck zu beaufschlagen, sodass beim Öffnen der entsprechenden Einlassventile bereits der für das Einbringen der Oberflächenbehandlungsmittel erforderliche Druck zur Verfügung steht.

**Fig. 2** zeigt ein Beispiel einer Kapsel 5.

Die Kapsel 5 besteht aus einem druckstabilen Gehäuse 5d, in der hier drei Kammern 5c ausgebildet sind. Die drei Kammern werden jeweils durch eine Kammerwandung 5e druck-, fluid-, und luftdicht voneinander getrennt. Jeder der drei Kammern ist eine Einlassöffnung 5b und eine Auslassöffnung 5a zugeordnet. Die Einlassöffnungen 5b können als Kupplungsteile ausgestaltet sein, an denen ein Druckschlauch angeschlossen werden kann. Die Auslassöffnungen 5a können Sperreinrichtung 5f aufweisen. Mit den Sperreinrichtungen 5f kann gesteuert werden, wann das in den jeweiligen Kammern 5c enthaltene Oberflächenbehandlungsmittel dem Innenraum 26 einer Vorrichtung V zugeführt wird.

Die Sperreinrichtungen können so ausgestaltet sein, dass sie sich bei einem in der jeweiligen Kammern 5c herrschenden Überdruck automatisch öffnen, beispielsweise als Rückschlagventile oder als Membran. Alternativ können auch aktive Sperreinrichtungen vorgesehen sein, etwa Magnetventile, mit denen die Auslassöffnungen 5a unabhängig vom Druck in den Kammern geöffnet bzw. geschlossen werden können.

An dem Gehäuse sind die vorstehend beschriebenen Codes bzw. Tags angeordnet. Die Kapsel ist vorzugsweise als wiederverwendbar Kapsel vorgesehen, die nach Benutzung wieder befüllt werden kann, etwa durch einen Dienstleister.

Fig. 3 zeigt einen unteren Abschnitt einer Vorrichtung V in einem Querschnitt gemäß einem weiteren Ausführungsbeispiel. Auch bei der hier gezeigten Ausgestaltung wird das Behältnis 25 mit einem Deckel verschlossen, wobei der Deckel allerdings keinen weiteren bzw. keinen zweiten Deckel aufweist.

In den Innenraum 26 des Behältnisses 25 ist ein Korb 30 angeordnet, in dem die zu behandelnden Formteile aufgenommen werden. Der Korb kann als Gitterkorb ausgestaltet sein.

Am Boden des Behältnisses 25 ist ein Rührwerk angeordnet, das hier als Schrägblattrührer 11 ausgestaltet ist und zum Vermischen des Oberflächenbehandlungsmittels mit dem Trägermittel vorgesehen ist.

Im Unterschied zu der in Fig. 1 gezeigten Ausgestaltung ist hier die Kapselaufnahme 20 an dem Korb 30 angeordnet, und zwar am Boden des Korbes. Die Kapselaufnahme 20 selbst kann ebenfalls die Struktur des Gitterkorbes 30 aufweisen, das heißt als Gitterbox ausgestaltet sein. Sofern die Kapselaufnahme 20 als Gehäuse ausgestaltet ist, ist im Boden des Gehäuses zumindest eine Öffnung 16 vorgesehen, durch die die nachfolgend beschriebenen Düsen 17 an die Kapsel 5, die in der Kapselaufnahme angeordnet ist, heranführbar sind. Bei der hier gezeigten Ausgestaltung ist die Kapselaufnahme 20 an der bodenseitigen Außenseite des Korbes 30 angeordnet.

Am Boden des Behältnisses 25 ist eine Beaufschlagungseinrichtung vorgesehen, mit der die Kammern der Kapsel 5 mit einem Gas und/oder Fluid 41 beaufschlagt werden. Die Beaufschlagungseinrichtung ist als eine Anzahl von Düsen 17 ausgebildet, die im Wesentlich senkrecht am Boden des Behältnisses 25 angeordnet sind und über eine bestimmte Länge in den Innenraum 26 des Behältnisses 25 hineinragen. Die Länge der Düsen 17 ist so zu bemessen, dass diese nach dem Einbringen des Korbes 30 mit der daran angeordneten Kapsel 5 in den Innenraum 26 in das Innere der Kapsel eindringen können, wie in Fig. 3 ersichtlich.

An der Unterseite des Behältnisses 25 können Anschlüsse vorgesehen sein, um eine oder mehrere Zuleitungen 6 an die Düsen anzuschließen. Über diese Zuleitungen 6 wird das Gas und/oder Fluid den Düsen zugeführt. Die Zuleitungen sind vorzugsweise mit einem hier nicht gezeigten Kompressor gekoppelt, um das Gas und\oder Fluid druckbeaufschlagt in die Kapsel 5 einzubringen.

Die Funktionsweise der Düsen 17 und das Zusammenwirken mit der Kapsel 5 werden mit Bezug auf Fig. 5 näher erläutert.

Damit die in der Kapselaufnahme 20 angeordnete Kapsel 5 korrekt oberhalb den Düsen platziert wird, ist es vorteilhaft, an dem Korb senkrecht verlaufende Führungsschienen vorzusehen, die mit an der Innenwandung des Behältnisses vorgesehenen Führungsschienen korrespondieren. Vorzugsweise sind die Führungsschienen so an dem Korb und an der Innenwandung angeordnet, dass der Korb 30 nur in einer radialen Ausrichtung in den Innenraum 26 des Behältnisses 25 eingebracht werden kann. Ferner sind die Führungsschienen so relativ zu der Kapselaufnahme 20 angeordnet, dass sich diese beim Einbringe des Korbes 30 in den Innenraum genau oberhalb der Düsen 17 befindet.

**Fig. 4** zeigt eine alternative Ausgestaltung des unteren Abschnittes eines Korbes 30. Der Korb 30 selbst kann auch hier als Gitterkorb ausgestaltet sein. Im Unterschied zu der in Fig. 3 gezeigten Ausgestaltung, ist die Kapselaufnahme 20 nicht an bodenseiteigen Außenseite des Gitterkorbes 30 sondern an der bodenseitigen Innenseite des Gitterkorbes angeordnet, sodass Kapselaufnahme 20 in das Innere des Gitterkorbes hineinragt. Alternativ kann die Kapselaufnahme 20 auch so am Boden des Gitterkorbes angeordnet sein, dass sie teilweise in das Innere des Korbes hineinragt und teilweise an der Unterseite des Korbes übersteht.

Auch bei der in Fig. 4 gezeigten Ausgestaltung des Korbes 30 weist die Kapselaufnahme 20 an der Unterseite zumindest eine Öffnung 16 auf, durch die die Düsen an die Kapsel 5 heranführbar sind.

Bei sämtlichen der vorstehend gezeigten Kapselaufnahmen sind diese so ausgestaltet, dass die Kapsel austauschbar in der Kapselaufnahme anordenbar ist.

Ferner können sämtliche der vorstehend gezeigten Kapselaufnahmen so ausgestaltet sein, dass mehrere Kapseln in ihnen angeordnet werden können. So können beispielsweise anstelle der in Fig. 2 gezeigten Kapsel 5 mit drei Kammern 5c drei Kapseln 5 mit jeweils einer Kammer 5c in der Kapselaufnahme angeordnet werden.

Fig. 5 zeigt ein Beispiel einer Kapsel 5 mit eingeführten Düsen 17 einer Beaufschlagungseinrichtung.

Die Kapsel 5, die in einer Kapselaufnahme 20 des Korbes 30 angeordnet ist, wird durch Absenken des Korbes in dem Innenraum 26 auf die oberen Enden der Düsen 17 aufgesetzt.

Durch ein weiteres Absenken des Korbes 30, etwa beim Verschließen des Deckels 15, wird der Boden der Kapsel 5 von den Düsen 17 durchstochen. Dadurch werden in dem Boden der Kapsel 5 Einlassöffnungen 5a ausgebildet, durch die die Düsen 17 in die Kammern 5c der Kapsel hineinragen. Um das Durchstechen des Bodens zu erleichtern können an den Spitzen der Düsen Klingen oder dergleichen vorgesehen sein.

Die Düsen 17 und/oder der Boden der Kapsel sind so ausgestaltet, dass die in den Einlassöffnungen 5a angeordneten Düsen 17 die Einlassöffnungen nicht druck- und fluiddicht verschließen. Dadurch ist gewährleistet, dass das in der Kapsel aufgenommene Oberflächenbehandlungsmittel aus der Kapsel entweichen kann. Nachdem die Düsen 17 die Kapselwandung durchstochen haben und in das Innere der Kapsel hineinragen wird über eine Zuleitung 6 Gas und/oder Fluid 41 den Düsen 17 zugeführt. Das Gas und/oder Fluid 41 entweicht dann aus den im Inneren der Kapsel angeordneten Düsenenden. Durch dieses Beaufschlagen der Kapselkammern 5c mit dem Gas und/oder Fluid 41 findet im Inneren der Kapsel ein Verdrängungsprozess statt, der das Oberflächenbehandlungsmittel durch die Einlassöffnungen 5a aus der Kapsel entweichen lässt. Die Einlassöffnungen 5a dienen damit, nicht erfindungsgemäß, auch gleichzeitig als Auslassöffnungen 5b.

Erfindungsgemäß ist eine oder mehrere Düsen axial bewegbar ausgestaltet, wie in Fig. 5 mit dem Doppelpfeil für die rechte Düse symbolisiert. So kann nach dem Aufstechen des Bodens die Düse entlang ihrer Längsachse vollständig oder teilweise aus der Kapsel 5 herausgefahren werden. Die Düse kann in diesem Fall funktionslos betrieben werden, das heißt nur als Spitze zum Aufstechen des Bodens, ohne dass über sie ein Gas und/oder Fluid der Kapsel zugeführt wird. Wird die Düse vollständig aus der Kapsel herausgefahren entsteht eine Auslassöffnung 5b, dessen Durchmesser im Wesentlichen dem maximalen Durchmesser der Düse entspricht. Wir nur eine der in einer Kammer angeordneten Düsen 17 herausgefahren und wird über die in der Kammer verbleibende Düse ein Gas und/oder Fluid der Kammer zugeführt kann das Oberflächenbehandlungsmittel auch durch die vergleichsweise große Auslassöffnung entweichen.

In einer weiteren Ausgestaltung kann die axial verfahrbare Düse soweit nach oben verfahrbar sein, dass sie auch den Deckel der Kapsel durchstechen kann. Nach dem Durchstechen des Deckels kann die Düse soweit nach unten verfahren werden, dass sie einerseits das Loch in dem Deckel vollständig freigibt und sich andererseits die Spitze der Düse noch im Inneren der Kapsel befindet. Dadurch können zusätzliche Auslassöffhung geschaffen werden, durch die das Oberflächenbehandlungsmittel in den Innenraum 26 des Behältnisses 25 entweichen kann.

Das Gas und/oder Fluid 41 wird vorzugsweise Druckbeaufschlagt der Kammer 5c zugeführt. Der Druck wird hierbei so gewählt, dass dieser größer ist als der Innendruck des Behältnisses. Dadurch wird gewährleistet, dass das Oberflächenbehandlungsmittel in den Innenraum des Behältnisses entweicht. Wird der Kammer 5c ein Fluid, etwa Wasser, zugeführt wird die Kammer quasi ausgespült.

An der seitlichen Außenwandung der Kapsel 5 ist hier ein Code 18, etwa ein Barcode oder ein RFID-Tag angeordnet. Hierzu korrespondierend kann an der seitlichen Innwandung des Behältnisses 25 eine entsprechende Leseeinrichtung angeordnet sein. Die Funktionsweise und Verwendung der Leseeinrichtung und des Codes 18 ist bereits vorstehend beschrieben worden.

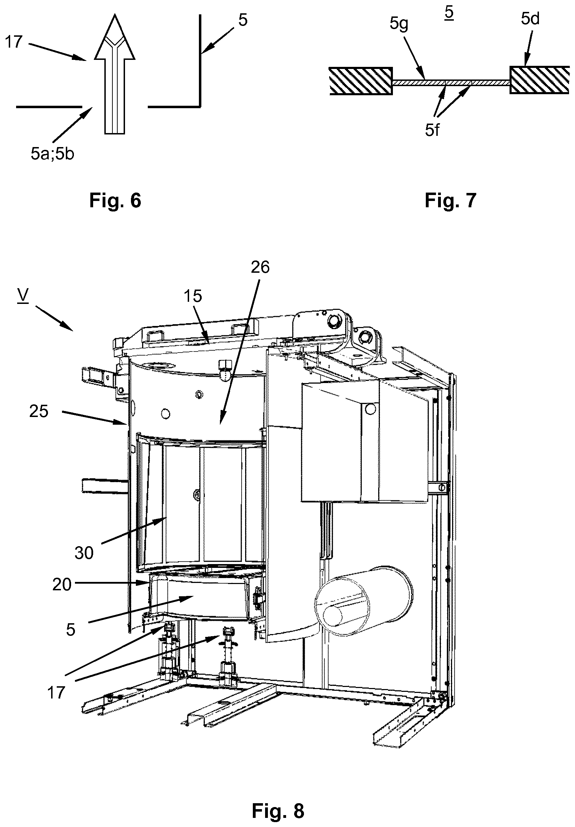

**Fig. 6** zeigt eine alternative Ausgestaltung einer Düse 17. Die Düse ist hier in Form eines Pfeiles ausgestaltet, wobei das vordere Ende breiter ist als der Schaft. Eine solche Ausgestaltung (breite Spitze und schmaler Schaft) hat den Vorteil, dass nach dem vollständigen Eindringen der Spitze in die Kammer der Kapsel eine Auslassöffnung 5b zur Verfügung steht, dessen Durchmesser im Wesentlichen dem Durchmesser der Spitze entspricht und damit deutlich größer ist als der Durchmesser des Schaftes.

**Fig. 7** zeigt eine Detailansicht einer Kapsel 5 im Bereich der Einlass-/Auslassöffnung 5a, 5b.

Im Bereich der Einlass-/Auslassöffnung 5a, 5b am Boden der Kapsel 5 ist ein Einstichbereich 5g festgelegt, der von der Spitze der Düse 17 durchstochen wird. Dieser Einstichbereich 5g kann so ausgestaltet sein, dass die Wandstärke geringer ist als die Wandstärke des übrigen Kapselgehäuses. Das Material des Einstichbereichs 5g kann hierbei dasselbe sein wie das Material des übrigen Kapselgehäuses.

In einer Ausgestaltung kann der Einstichbereich 5g auch ein anderes Material aufweisen als das übrige Kapselgehäuse. Vorzugsweise wird für den Einstichbereich 5g ein weiches Material vorgesehen, während für das übrige Kapselgehäuse ein festes Material vorgesehen wird. Beispielsweise kann der Einstichbereich 5g gummiartig ausgestaltet sein, sodass ein leichtes Durchstechen mit der Düse gewährleistet wird. Steht der gummiartige Einstichbereich 5g unter einer Zugspannung, kann sich Material nach dem Durchstechen zusammenziehen, wodurch sich der Durchmesser der Auslassöffnung vergrößert.

In einer Ausgestaltung kann in dem Einstichbereich 5g eine oder mehrere Sollbruchstellen 5f vorgesehen sein, was das Durchstechen mit der Düse ebenfalls erleichtert. Die Sollbruchstellen können hierbei unabhängig vom für den Einstichbereich 5g verwendeten Material vorgesehen sein.

**Fig. 8** zeigt eine konkrete Ausführung einer Vorrichtung V in einer Schnittansicht, wobei für die Erfindung nicht relevante Bestandteile der Vorrichtung nicht gezeigt sind.

Erkennbar sind hier insbesondere das Behältnis 25 mit dem darin angeordneten Korb 30 sowie zwei am Boden des Behältnisses 25 angeordnete Düsen 17. Die Düsen 17 sind axial verfahrbar, um den Boden der Kapsel 5 zu durchstechen und ein Gas und/oder ein Fluid dem Innenraum der Kapsel zuzuführen.

Es hat sich gezeigt, dass sich die Vorrichtung V insbesondere zur Oberflächenbehandlung, z.B. Färben und/oder Imprägnieren von Formteilen, die in einem pulverbasierten Fertigungs- bzw. Druckverfahren (3D-Druckverfahren) hergestellt werden, eignet.

So kann beispielsweise eine erste Kammer der Kapsel 5 ein Mittel zum Vorbehandeln der Formteile enthalten, z.B. Albegal. Eine zweite Kammer kann ein Färbemittelgemisch aus einem Farbstoff und etwaigen Zusatzstoffen, etwa zum anschließenden Färben der Formteile enthalten. Eine dritte Kammer kann ein Mittel zum Nachbehandeln der Formteile enthalten, wiederum z.B. Albegal. Das Nachbehandeln kann auch ein Imprägnieren der Formteile umfassen, sodass in der dritten Kammer ein entsprechendes Imprägniermittel enthalten sein kann. Dementsprechend ist es bei dieser beispielhaften Anwendung erfindungsgemäß vorgesehen, die drei Kammern der Kapsel 5 in der vorstehend beschriebenen Reihenfolge mit dem Gas und/oder Fluid zu beaufschlagen, um die jeweiligen in den Kammern enthaltenen Behandlungsmittel in dieser Reihenfolge in den Innenraum der 26 der Vorrichtung V einzubringen.

Während der Behandlung der Formteile kann der Innenraum je nach Bedarf mit einem Überdruck oder mit einem Unterdruck beaufschlagt werden. So kann es beim Imprägnieren von Formteilen vorteilhaft sein, nach dem Einbringen der zu imprägnierenden Formteile den Innenraum zunächst mit Unterdruck zu beaufschlagen und bei Vorhandensein des Unterdruckes das Imprägniermittel aus der Kapsel und das Trägermittel einzubringen. Nach dem Einbringen des Imprägniermittels und des Trägermittels kann der Innenraum sodann mit einem Überdruck beaufschlagt werden, sodass Imprägniermittel auch in kleinste Poren der Formteile gedrückt wird.

Offenbart ist hier ferner eine Vorrichtung zur Oberflächenbehandlung, insbesondere zum Färben von Formteilen, mit
- einem Behältnis zur Aufnahme einer Anzahl von zu behandelnden Formteilen,
- einem ersten Deckel, wobei das Behältnis mit dem ersten Deckel vorzugsweise druck-, fluid- und/oder luftdicht verschließbar ist, und
- einer Anordnung zum Einbringen von flüssigen und/oder pulverförmigen Oberflächenbehandlungsmitteln in einen Innenraum des geschlossenen Behältnisses, wobei
   - die Anordnung eine Kapsel und eine Beaufschlagungseinrichtung umfasst,
   - in der Kapsel die einzubringenden Oberflächenbehandlungsmittel aufgenommen sind, und
   - die Beaufschlagungseinrichtung mit der Kapsel koppelbar ist, um zumindest eine in der Kapsel ausgebildete Kammer mit einem Gas und/oder einem Fluid zu beaufschlagen, um das in der Kapsel aufgenommene Oberflächenbehandlungsmittel in den Innenraum des Behältnisses zu bringen bzw. einzubringen.

Die Vorrichtung eignet sich insbesondere zum Färben von in einem pulverbasierten Fertigungs- bzw. Druckverfahren (3D-Druckverfahren) hergestellten Formteilen aus Kunststoff, Sand und/oder Gips. Ferner wird durch diese Vorrichtung erstmals eine industrielle Oberflächenbehandlung, insbesondere ein Färben von in einem 3D-Druckverfahren hergestellten Formteilen möglich, was insbesondere in einer Serienfertigung vorteilhaft ist.

Das in die Kapsel eingebrachte Gas und/oder einem Fluid bewirkt, dass das in der Kapsel vorhandene Oberflächenbehandlungsmittel aus der Kapsel austritt und in den Innenraum des Behältnisses gelangt.

Durch das Vorsehen einer oder mehrerer Kapseln, in die das Oberflächenbehandlungsmittel aufgenommen ist, wird vermieden, dass das Oberflächenbehandlungsmittel direkt in das Behältnis gegeben werden muss. Es muss lediglich die Kapsel mit dem Oberflächenbehandlungsmittel in das Behältnis gegeben werden. Dadurch wird es ermöglicht vorkonfektionierte Kapseln zu verwenden, was ein gleichbleibendes Behandlungsergebnis auch bei mehreren Färbevorgängen gewährleistet.

Die Kapsel kann in dem Innenraum des Behältnisses anordenbar sein. Die Kapsel kann als Vorratsbehälter ausgestaltet.

Die Beaufschlagungseinrichtung kann zumindest eine Zuleitung aufweisen, um das Gas und/oder Fluid der zumindest einen Kammer der Kapsel zuzuführen, wobei die Zuleitung durch eine Wandung des Behältnisses oder durch den ersten Deckel in den Innenraum des Behältnisses geführt ist.

Vorteilhaft ist es, wenn
- das innenraumseitige Ende der Zuleitung als Düse ausgestaltet ist, oder
- im Innenraum des Behältnisses zumindest eine Düse angeordnet ist, wobei die Düse mit der Zuleitung gekoppelt oder koppelbar ist,
wobei die Düse angepasst ist, eine Wandung der Kapsel zu durchdringen oder durchzustechen, wenn die Kapsel gegen die Düse gedrückt wird.

In einer Ausgestaltung der Erfindung kann das innenraumseitige Ende der Zuleitung mit Einlassöffnungen der Kapsel koppelbar sein.

Die Kapselaufnahme kann in dem ersten Deckel ausgebildet sein und einen Aufnahmeraum zur Aufnahme der Kapsel bilden.

Der Kapselaufnahme kann ein zweiter Deckel zugeordnet sein, mit dem die Kapselaufnahme verschließbar ist und/oder mit dem die in der Kapselaufnahme angeordnete Kapsel gegen die Öffnung der Kapselaufnahme gedrückt wird, wobei Auslassöffnungen der Kapsel der Öffnung zugewandt sind, wobei
- der zweite Deckel die Kapselaufnahme druck-, fluid- und/oder luftdicht verschließt, und/oder
- die gegen die Öffnung gedrückte Kapsel die Öffnung druck-, fluid- und/oder luftdicht verschließt.

An der Öffnung der Kapselaufnahme kann ein umlaufender Dichtungsring angeordnet sein, gegen den die in der Kapselaufnahme des Deckels angeordnete Kapsel gedrückt wird.

Zwischen dem Rand des Behältnisses und dem ersten Deckel kann ein umlaufender Dichtungsring angeordnet sein.

Vorteilhaft ist es, wenn der erste Deckel schwenkbar an dem Behältnis angeordnet ist. Vorteilhaft ist es zudem, wenn der zweite Deckel schwenkbar an dem ersten Deckel angeordnet ist.

Die Kapselaufnahme kann so in dem ersten Deckel ausgebildet sein, dass der Aufnahmeraum zur Aufnahme der Kapsel in den Innenraum hineinragt.

An dem zweiten Deckel können Koppelglieder vorgesehen sein, um die Druckluftschläuche beim Schließen des zweiten Deckels mit den Einlassöffnungen der in der Kapselaufnahme angeordneten Kapsel luft- und druckdicht zu verbinden. Damit muss ein Anwender lediglich die Kapsel einlegen und den zweiten Deckel schlie-βen. Ein manuelles Anschließen der Kapsel an den Kompresser bzw. an die Druckluftschläuche entfällt.

In einer Ausgestaltung der Erfindung kann die Kapselaufnahme als Kapselbehälter mit der zumindest einen Öffnung ausgestaltet sein, insbesondere als Gitterbox.

Die Vorrichtung kann einen in den Innenraum des Behältnisses ein- und ausbringbaren Korb zur Aufnahme der Formteile aufweist. Die Formteile können so außerhalb der Vorrichtung in den Korb eingelegt werden und dann zusammen mit dem Korb in den Behandlungsraum der Vorrichtung eingebracht werden.

Die Kapselaufnahme bzw. die Gitterbox kann an dem Korb angeordnet sein, vorzugsweise am Boden des Korbes, besonders bevorzugt zumindest teilweise an der bodenseitigen Außenseite des Korbes. Die Kapsel ist hierbei vorzugsweise so in der Kapselaufnahme anordenbar, dass sie beim Einbringen des Korbes in das Behältnis an der Beaufschlagungseinrichtung aufliegt oder gegen die Beaufschlagungseinrichtung, insbesondere gegen die Düsen gedrückt wird.

Nach dem Einbringen des Korbes in das Behältnis kann die Kapsel auch beabstandet zu der Beaufschlagungseinrichtung sein. Die Beaufschlagungseinrichtung oder Teile davon können dann an die Kapsel herangeführt werden.

Die Kapsel selbst ist hierbei vorzugsweise so ausgestaltet, dass das Drücken gegen die Düsen ein Durchdringen oder ein Durchstechen der Wandung der Kapsel bewirkt. Durch das Durchdringen oder Durchstechen wird so eine Öffnung in der Kapselwandung gebildet, durch die das Oberflächenbehandlungsmittel aus der Kapsel austreten und in den Innenraum des Behältnisses gelangen kann, insbesondere wenn über die Düsen das Gas und/oder Fluid der Kapsel zugeführt wird. Das Drücken der Kapsel gegen die Düsen kann von dem ersten Deckel bewirkt werden, wenn der Deckel geschlossen wird. Durch das Schließen des Deckels kann der Korb leicht nach unten gedrückt werden, was wiederum bewirkt, dass die in der Kapselaufnahme angeordnete Kapsel gegen die Düsen gedrückt wird und die Düsen den Boden der Kapsel durchstechen.

Vorteilhaft ist es, wenn die Anordnung zum Einbringen der Oberflächenbehandlungsmittel einen Kompressor aufweist, der mit der Kapsel, vorzugsweise über die zumindest eine Zuleitung, koppelbar ist, um das Gas und/oder das Fluid mit einem Druck in den Innenraum der Kapsel einzubringen, der größer ist als der Innendruck des Behältnisses. In einer Ausgestaltung kann als Fluid "normales Wasser" aus der Wasserleitung sein, wobei der dort zur Verfügung stehende Wasserdruck gegebenenfalls ausreichend sein kann.

Der zweite Deckel kann eine Anzahl von Pneumatikkoppelgliedern aufweisen, die mit den Zuleitungen einerseits mit dem Kompressor und andererseits mit den Einlassöffnungen der Kapsel koppelbar sind.

Erfindungsgemäß ist zumindest eine Düse in axialer Richtung bewegbar ausgestaltet.

Die Düse kann so beispielsweise aus der Einlassöffnung der Kapsel herausgefahren, nachdem die Düse mittels Durchstechen des Kapselbodens die Einlassöffnung erzeugt hat. Die Düse fungiert hierbei als eine Art "Nadel" zum Aufstechen der Kapsel.

Die Vorrichtung kann
- eine Fluidzufuhr aufweisen, über das ein Fluid, insbesondere Wasser in den Innenraum einbringbar ist, wobei der Fluidzufuhr ein Absperrventil zugeordnet ist, und/oder
- eine Einrichtung aufweisen, mit der der Innenraum mit einem Unterdruck und/oder mit einem Überdruck beaufschlagbar ist.

Vorteilhafterweise weist die Vorrichtung einen Abfluss auf, um den Innenraum zu entleeren, vorzugsweise mittels einer mit dem Abfluss koppelbaren Unterdruckabsaugeinrichtung.

An dem Behältnis kann eine Heiz- und/oder Kühleinrichtung, vorzugsweise eine Heiz- und/oder Kühlmanschette angeordnet sein, zum Aufheizen und/oder Abkühlen des Innenraumes. Zusätzlich oder alternativ kann eine externe Heiz- und/oder Kühleinrichtung vorgesehen sein, um das sich in dem Innenraum befindliche oder dem Innenraum zuzuführende Fluid aufzuheizen oder abzukühlen.

Die Vorrichtung kann eine Anzahl von Messwertfühler, insbesondere einen Temperaturfühler, Druckfühler und/oder pH-Wertfühler aufweisen, die dem Innenraum zugeordnet sind.

Die Vorrichtung kann ein Rührwerk, insbesondere Magnetrührer, Schrägblattrührer oder Stabrührer, aufweisen, um etwa ein in dem Innenraum vorhandenes flüssiges Trägermaterial mit dem zugeführten Oberflächenbehandlungsmittel zu mischen.

Die Beaufschlagungseinrichtung kann angepasst sein, eine Anzahl von in der Kapsel ausgebildeten Kammern getrennt und unabhängig voneinander mit dem Gas und/oder dem Fluid zu beaufschlagen. Damit können etwa mehrere Kammern der Kapsel zeitlich nacheinander geöffnet werden und das in den Kammern enthaltene Oberflächenbehandlungsmittel kann zeitlich nacheinander dem Innenraum zugeführt werden.

Zusätzlich kann die Vorrichtung eine Zufuhreinrichtung zum Zuführen von Reinigungsmittel in den Innenraum des Behältnisses aufweisen. Der Innenraum kann so bei geschlossenem Deckel einer Reinigung unterzogen werden. Das Reinigungsmittel kann dann nach dem Reinigungsvorgang über die Abflussvorrichtung aus dem Innenraum abgeführt werden. Die Zufuhreinrichtung kann eine Reinigungsdüse umfassen, die in einer Ausgestaltung der Erfindung in der Seitenwandung des Behältnisses angeordnet sein kann. Ferner kann eine Reinigungsdüse in dem Deckel vorgesehen sein, um etwa Spülwasser dem Behältnis zuzuführen.

An den offenen Enden der Düsen, das heißt an jenen Enden, die in die Kapsel eindringen, können Klingen angeordnet sein, um ein Durchstechen der Kapselwandung zu erleichtern.

Die Vorrichtung weist vorteilhafterweise eine Datenverarbeitungseinrichtung auf oder ist mit einer Datenverarbeitungseinrichtung koppelbar, wobei die Datenverarbeitungseinrichtung operativ mit dem Kompressor und/oder mit den Messwertfühlern koppelbar ist, und die angepasst ist, das Beaufschlagen der Kapsel mit dem Fluid und/oder Gas durch den Kompressor zu steuern und/oder die von den Messwertfühlern erfassten Messgrößen zu überwachen.

Das Volumen des Innenraumes kann zwischen 5000 cm³ und 0,5 m³ betragen. Für eine großindustrielle Fertigung können aber auch größere Volumina vorgesehen sein.

Besonders vorteilhaft ist es, wenn die Vorrichtung eine Leseeinrichtung aufweist, insbesondere eine Barcode-, QR-Code-, RFID- oder NFC-Leseeinrichtung zum Lesen eines an der Kapsel angebrachten Barcodes, QR-Codes, RFID-Tags oder NFC-Tags. Vorzugsweise ist die Leseeinrichtung an der Innenseite des zweiten Deckels oder an einer Seitenwandung der Kapselaufnahme oder an einer seitlichen Innenwandung des Behältnisses angeordnet, und zwar so, dass der Code oder das Tag an der Kapsel gelesen bzw. ausgelesen werden kann.

Die Leseeinrichtung ist vorzugsweise mit der Datenverarbeitungseinrichtung gekoppelt und angepasst, den gelesenen Code bzw. die aus dem Tag ausgelesenen Daten an die Datenverarbeitungseinrichtung zu übertragen, wobei der Code bzw. die Daten des Tag angeben, welche Oberflächenbehandlungsmittel sich in welchen Kammern der Kapsel befinden und welche Parameter bei der Oberflächenbehandlung wie einzustellen sind. Der Benutzer muss damit nur mehr die zu behandelnden Formteile und die Kapsel in das Behältnis einbringen und den Deckel schließen. Anhand der Daten bzw. anhand des Codes kann führ die Vorrichtung das Oberflächenbehandlungsprogramm vollautomatisch und ohne manuellen Eingriff durch. Gleichbleibende Ergebnisse der Oberflächenbehandlung werden so gewährleistet.

Offenbart wird hier des Weiteren ein Verfahren zur Oberflächenbehandlung, insbesondere zum Färben von Formteilen, mit einer vorstehend genannten Vorrichtung und einer erfindungsgemäßen Kapsel, wobei die Kapsel zumindest eine Kammer aufweist, wobei in der zumindest einen Kammer ein Oberflächenbehandlungsmittel aufgenommen ist, wobei die Formteile in das Behältnis der Vorrichtung gegeben werden, und wobei das Verfahren folgende Schritte umfasst, nachdem die Kapsel in einen Betriebszustand versetzt wurde
(a) Füllen des Behältnisses mit einem flüssigen Trägermaterial, vorzugsweise Wasser,
(b) Beaufschlagen einer ersten Kammer der Kapsel mit einem Gas und/oder einem Fluid, sodass das in der ersten Kammer vorgesehene Oberflächenbehandlungsmittel aus der ersten Kammer in den Innenraum entweicht.

"In einen Betriebszustand versetzen" bedeutet, dass eine gewünschte Kapsel in die Kapselaufnahme eingebracht wird, der Deckel oder der zweite Deckel verschlossen wird, sodass der Innenraum der Vorrichtung weitgehend druck-, fluid- und luftdicht verschlossen ist, und die Kapsel beispielsweise an den Kompressor angeschlossen ist.

Wenn die Kapsel mehr als eine Kammer aufweist, kann
- der Schritt (b) oder die Schritte (a) und (b) für jede weitere Kammer der Kapsel wiederholt werden, oder
- der Schritt (b) für jede Kammer der Kapsel im Wesentlichen gleichzeitig ausgeführt wird.

Nach dem Schritt (b) kann nach Ablauf eines vorbestimmten Zeitraumes in einem Schritt (c) das Trägermaterial-Oberflächenbehandlungsmittel-Gemisch aus dem Behältnis entfernt werden.

Der Schritt (c) ist ein optionaler Schritt.

In dem Verfahren kann eine weitere Kammer der Kapsel mit einem Gas und/oder Fluid beaufschlagt werden, um ein Entweichen des Oberflächenbehandlungsmittels aus dieser weiteren Kammer zu bewirken, ohne dass zunächst das bereits in der Vorrichtung enthaltene Trägermaterial-Oberflächenbehandlungsmittel-Gemisch aus dem Behältnis entfernt wird.

Ebenso kann es vorgesehen sein, den Schritt (a) nur einmalig auszuführen und lediglich den Schritt (b) für die weiteren Kammern der Kapseln zu wiederholen. So ist es beispielsweise möglich, dass während des Färbevorganges zeitlich hintereinander die Kammern der Kapseln geöffnet werden, damit das jeweilige Oberflächenbehandlungsmittel aus der entsprechende Kamer entweichen kann, ohne dass die Vorrichtung entleert wird und wobei der Schritt (a) lediglich einmal, z.B. am Anfang des Färbeverfahrens durchgeführt wird.

Vor oder nach dem Beaufschlagen der Kammer der Kapsel mit dem Fluid und/oder Gas kann das Trägermaterial bzw. das Trägermaterial-Oberflächenbehandlungsmittel-Gemisch erhitzt werden, vorzugsweise mit der an dem Behältnis angeordneten Heiz- und/oder Kühleinrichtung.

Als letzter Schritt des Verfahrens, der optional ist, können die in dem Behältnis eingebrachten Formteile getrocknet werden, vorzugsweise mit einer an dem Behältnis angeordneten Trocknungseinrichtung, etwa eine Warm- bzw. Heißlufteinrichtung, mit der der Innenraum des Behältnisses mit warmer bzw. heißer Luft beaufschlagt werden kann.

Schließlich wird die Verwendung einer Kapsel zur Oberflächenbehandlung, insbesondere zum Färben von Formteilen, offenbart, wobei die Formteile für die Oberflächenbehandlung in eine vorstehend genannte Vorrichtung zur Oberflächenbehandlung eingebracht werden.

### Bezugszeichen:

- V: Vorrichtung zur Oberflächenbehandlung
- 1: Verriegelung für den großen Deckel 15
- 2: Verriegelung für den kleinen Deckel 4
- 3: Dichtungsring zwischen Behältnis 25 und großen Deckel 15
- 4: zweiter (kleiner) Deckel (ggf. mit integriertem Pneumatikverbinder)
- 5: Kartusche bzw. Kapsel mit mindesten einer, vorzugsweise drei Kammern
- 5a: Auslassöffnungen (z.B. Auslassventile)
- 5b: Einlassöffnungen (z.B. Einlassventile)
- 5c: Kammern der Kapsel 5
- 5d: druckstablies und fluiddichtes Gehäuse der Kapsel 5
- 5e: Kammerwandungen der Kapsel 5
- 5f: Sperreinrichtung (z.B. Rückschlagventil)
- 5g: Einstichbereich in der Kapselwandung bzw. am Kapselboden
- 5f: Sollbruchstelle im Öffnungs- bzw. Einstichbereich 5g
- 6: Schläuche, z.B. Druckschläuche bzw. Pneumatikventile und -schläuche zum Zünden (Aktivieren) der Kammern der Kapsel 5
- 7: Kompressor zum Beaufschlagen der Kammern der Kapsel 5 mit Überdruck
- 8: Ventil zum Herstellen eines Unterdruckes
- 9: Fluidzufuhr, insbesondere Wasserzufuhr inklusive Absperrventil
- 10: Abfluss inklusive Absperrventil
- 11: Rührer, z.B. Magnetrührer und dazugehörige Magnete oder Schrägblattrührer
- 12: Heizeinrichtung (z.B. Heizmanschetten an der Wandung des Behältnisses 25)
- 13: Temperaturfühler
- 14: Dichtungsring zwischen Kapsel 5 und Kapselaufnahme 20
- 15: erster (großer) Deckel mit Kapselaufnahme 20
- 16: Öffnung in der Kapselaufnahme 20
- 17: Düsen zum Einbringen eines Gases und/oder eines Fluids in die Kammer(n) 5c der Kapsel 5
- 18: an der Kapsel 5 angebrachter Code, z.B. Strichcode, QR-Code, NFC- oder RFID-Tag
- 20: Kapselaufnahme bzw. Kapselhalter, z.B. im Deckel 15 oder am Korb 30
- 25: Behältnis
- 26: Innenraum des Behältnisses 25 bzw. der Vorrichtung V
- 30: Korb zur Aufnahme der Formteile
- 40: Fluid, z.B. Wasser, im Innenraum 26 des Behältnisses 25
- 41: Gas und/oder Fluid, das in die Kammer(n) 5c der Kapsel 5 eingebracht wird

## Patentansprüche

1. System zur Oberflächenbehandlung von Formteilen, umfassend eine Kapsel (5) und eine als eine Anzahl von Düsen (17) ausgebildete Beaufschlagungseinrichtung, wobei die Düsen axial bewegbar sind, wobei
- die Kapsel ein druckstabiles und fluiddichtes Gehäuse (5d) aufweist,
- im Inneren des Gehäuses (5d) zumindest eine Kammer (5c) ausgebildet ist zur Aufnahme eines flüssigen oder pulverförmigen Oberflächenbehandlungsmittels,
- in der Wandung des Gehäuses (5) mittels Durchstechen der Wandung mit den axial bewegbaren Düsen (17) der Beaufschlagungseinrichtung zumindest eine Auslassöffnung (5a) und zumindest eine Einlassöffnung (5b) ausbildbar sind, wobei durch die Auslassöffnung das Oberflächenbehandlungsmittel entweichen kann, und
- die zumindest eine Kammer (5c) der Kapsel (5) durch die zumindest eine Einlassöffnung (5b) mittels der Düsen mit einem Fluid oder Gas (41) beaufschlagbar ist, um das Entweichen des Oberflächenbehandlungsmittels durch die Auslassöffnung (5a) zu bewirken, und
- wobei zumindest ein Abschnitt der Wandung des Gehäuses (5d) als Einstichbereich (5g) ausgebildet ist, wobei in dem Einstichbereich (5g) die Auslassöffnung (5a) und die Einlassöffnung (5b) herstellbar sind.

2. System nach dem vorhergehenden Anspruch, wobei die Düsen (17) oder die Wandung des Gehäuses so ausgestaltet sind, dass die in der zumindest einen Einlassöffnung angeordnete Düse die Einlassöffnung nicht druck- und fluiddicht verschließt.

3. System nach einem der vorhergehenden Ansprüche, wobei im Inneren des Gehäuses (5d) zumindest zwei Kammern (5c) ausgebildet sind, wobei jede Kammer ein flüssiges oder pulverförmiges Oberflächenbehandlungsmittel aufnimmt, wobei jeder Kammer zumindest eine Einlassöffnung (5b) und zumindest eine Auslassöffnung (5a) zugeordnet ist, wobei die Kammern unabhängig voneinander mit dem Fluid oder Gas (41) beaufschlagbar sind und wobei aus jeder Kammer unabhängig voneinander das Oberflächenbehandlungsmittel entweichen kann.

4. System nach dem vorhergehenden Anspruch, wobei in dem Gehäuse (5d) Kammerwandungen (5e) vorgesehen sind, die die Kammern (5c) fluid- und luftdicht voneinander trennen, wobei die Kammerwandungen (5e) aus einem stabilen Material bestehen.

5. System nach einem der vorhergehenden Ansprüche, wobei die Auslassöffnung (5a) als Einlassöffnung (5b) fungiert.

6. System nach einem der vorhergehenden Ansprüche, wobei der Einstichbereich (5g) dünnwandiger ausgestaltet ist als die übrige Wandung des Gehäuses (5d).

7. System nach dem vorhergehenden Anspruch, wobei in dem Einstichbereich (5g) zumindest eine Sollbruchstelle (5f) vorgesehen ist.

8. System nach einem der vorhergehenden Ansprüche, wobei an dem Gehäuse (5d) ein Barcode, QR-Code, RFID-Tag oder NFC-Tag angeordnet ist, die Informationen darüber enthalten, welches Oberflächenbehandlungsmittel sich in welcher Kammern (5c) der Kapsel (5) befindet und welche Parameter bei der Oberflächenbehandlung wie einzustellen sind.

9. System nach einem der vorhergehenden Ansprüche, wobei an den Spitzen der Düsen Klingen vorgesehen sind.

## Claims

1. System for surface treatment of molded parts, comprising a capsule (5) and an application device designed as a number of nozzles (17), wherein the nozzles are axially movable, wherein
- the capsule has a pressure-stable and fluid-tight housing (5d),
- at least one chamber (5c) is formed inside the housing (5d) for receiving a liquid or powdered surface treatment agent,
- at least one outlet opening (5a) and at least one inlet opening (5b) can be formed in the wall of the housing (5) by piercing the wall with the axially movable nozzles (17) of the application device, wherein the surface treatment agent can escape through the outlet opening, and
- the at least one chamber (5c) of the capsule (5) can be supplied with a fluid or gas (41) through the at least one inlet opening (5b) by means of the nozzles in order to cause the surface treatment agent to escape through the outlet opening (5a), and
- at least one portion of the wall of the housing (5d) is designed as a piercing region (5g), wherein the outlet opening (5a) and the inlet opening (5b) can be produced in the piercing region (5g).

2. System according to the preceding claim, wherein the nozzles (17) or the wall of the housing are designed such that the nozzle arranged in the at least one inlet opening does not close the inlet opening in a pressure-tight and fluid-tight manner.

3. System according to either of the preceding claims, wherein at least two chambers (5c) are formed inside the housing (5d), wherein each chamber receives a liquid or powdered surface treatment agent, each chamber is associated with at least one inlet opening (5b) and at least one outlet opening (5a), the chambers can be supplied with the fluid or gas (41) independently of one another, and the surface treatment agent can escape from each chamber independently of one another.

4. System according to the preceding claim, wherein chamber walls (5e) are provided in the housing (5d), which chamber walls separate the chambers (5c) from one another in a fluid-tight and air-tight manner, wherein the chamber walls (5e) consist of a stable material.

5. System according to any of the preceding claims, wherein the outlet opening (5a) functions as an inlet opening (5b).

6. System according to any of the preceding claims, wherein the wall in the piercing region (5g) is thinner than the rest of the wall of the housing (5d).

7. System according to the preceding claim, wherein at least one predetermined breaking point (5f) is provided in the piercing region (5g).

8. System according to any of the preceding claims, wherein a barcode, QR code, RFID tag or NFC tag is arranged on the housing (5d), which contains information about which surface treatment agent is located in which chambers (5c) of the capsule (5) and how certain parameters are to be set during the surface treatment.

9. System according to any of the preceding claims, wherein blades are provided at the tips of the nozzles.

## Revendications

1. Système de traitement de surface de pièces moulées, comprenant une capsule (5) et un dispositif d'alimentation réalisé comme un certain nombre de buses (17), les buses étant mobiles axialement,
- la capsule présentant un boîtier (5d) stable à la pression et étanche aux fluides,
- au moins une chambre (5c) étant réalisée à l'intérieur du boîtier (5d) et permettant de recevoir un agent de traitement de surface liquide ou pulvérulent,
- au moins une ouverture de sortie (5a) et au moins une ouverture d'entrée (5b) pouvant être réalisées dans la paroi du boîtier (5) en perçant la paroi au moyen des buses (17) mobiles axialement du dispositif d'alimentation, l'agent de traitement de surface pouvant s'échapper par l'ouverture de sortie, et
- l'au moins une chambre (5c) de la capsule (5) pouvant être alimentée par un fluide ou un gaz (41) à travers l'au moins une ouverture d'entrée (5b) au moyen des buses afin de provoquer l'échappement de l'agent de traitement de surface à travers l'ouverture de sortie (5a), et
- au moins une section de la paroi du boîtier (5d) étant réalisée comme zone de perforation (5g), l'ouverture de sortie (5a) et l'ouverture d'entrée (5b) pouvant être réalisées dans la zone de perforation (5g).

2. Système selon la revendication précédente, dans lequel les buses (17) ou la paroi du boîtier sont réalisées de telle sorte que la buse disposée dans l'au moins une ouverture d'entrée ne ferme pas l'ouverture d'entrée de manière étanche à la pression et aux fluides.

3. Système selon l'une des revendications précédentes, dans lequel au moins deux chambres (5c) sont réalisées à l'intérieur du boîtier (5d), chaque chambre recevant un agent de traitement de surface liquide ou pulvérulent, au moins une ouverture d'entrée (5b) et au moins une ouverture de sortie (5a) étant associées à chaque chambre, les chambres pouvant être alimentées indépendamment les unes des autres par le fluide ou le gaz (41) et l'agent de traitement de surface pouvant s'échapper de chaque chambre indépendamment les unes des autres.

4. Système selon la revendication précédente, dans lequel des parois de chambre (5e) sont prévues dans le boîtier (5d), lesquelles séparent les chambres (5c) les unes des autres de manière étanche aux fluides et à l'air, les parois de chambre (5e) étant constituées d'un matériau stable.

5. Système selon l'une des revendications précédentes, dans lequel l'ouverture de sortie (5a) fonctionne comme une ouverture d'entrée (5b).

6. Système selon l'une des revendications précédentes, dans lequel la zone de perforation (5g) est conçue avec des parois plus minces que la paroi restante du boîtier (5d).

7. Système selon la revendication précédente, dans lequel au moins un point de rupture cible (5f) est prévu dans la zone de perforation (5g).

8. Système selon l'une des revendications précédentes, dans lequel un code-barres, un code QR, une étiquette RFID ou une étiquette NFC est disposé sur le boîtier (5d) et contient des informations sur quel agent de traitement de surface se trouve dans quelles chambres (5c) de la capsule (5) et quels paramètres doivent être réglés et de quelle manière pour le traitement de surface.

9. Système selon l'une des revendications précédentes, dans lequel des lames sont prévues aux extrémités des buses.
